# EUROPEAN PATENT APPLICATION

(11) **EP 2 880 976 A1**
(43) Date of publication of application: **10.06.2015**
(21) Application number: 14000984.6
(22) Date of filing: 17.03.2014
(51) Int. Cl.: A01M 29/24

(54) **Electromagnetic wave emitter for repelling pest insects and animals**

(30) Priority: 06.12.2013 AR P130104537
(71) Applicant: Valls, Javier Ignacio, Ciudad Autónoma de Buenos Aires (AR)
(72) Inventor: Valls, Javier Ignacio, Ciudad Autónoma de Buenos Aires (AR)
(74) Representative: Canela Giménez, Teresa

(57) **Abstract**

It is a device designed to eradicate plague insects and animals, preventing their reentry and to repel new infestations; suitable for being applied in both internal and closed environments such as large warehouses and industrial plants, as well as outdoors. It comprises an electromagnetic waves generator with double emitter, which combines a wave emitter with fixed antenna and other wave emitter with flexible antenna, both amplified. The wave generator constitutes a device which comprises an electric power supply, attached to a current transformer which adjusts current according to the driving circuit, rectifying and filtering means, a high frequency oscillator, a medium-frequency oscillator, amplifiers, a fixed electromagnetic wave emitter coil, a flexible electromagnetic wave emitter coil, and a low-frequency modulating oscillator. The system electric current feeds the device by means of a transformer that reduces the power of the electric current into 12 volts.

## Description

### SCOPE OF THE INVENTION

This invention is mainly aimed at an ELECTRONIC ELECTROMAGNETIC WAVE EMITTER, FOR REPELLING PLAGUE INSECTS AND ANIMALS, specially designed to eradicate plague insects and animals, preventing their re-entry, and to repel new infestations.

More specifically, this invention relates to a special device for eradicating and repelling plague insects and animals, characterized in that it comprises a generator of electromagnetic waves with a double emitter, one emitter of waves having a fixed antenna, and other emitter of electromagnetic waves having a flexible antenna, both amplified.

As it has been set forth, there is provided a specific electronic device that can be applied to both internal and closed environments, as well as outdoors, which stands out because its emissions are not weakened by materials that absorb emissions, and ensures interaction between its emitters, which enhances the effect, with a clearly lower consumption, especially when used in large areas.

In order to efficiently implement this purpose, there is provided a device which is basically comprised of:
- A socket for being fed by the conventional electric power system.
- A network transformer to the current required for the circuit;
- Rectification and filtering means.
- High-frequency oscillator
- Medium-frequency oscillator
- Amplifiers
- Flexible 15-meter-long coil for emitting electromagnetic waves
- Fixed coil for emitting electromagnetic waves
- Low-frequency modulating oscillator

As it is known, complex waves do not penetrate solid metallic materials, so the area of action is reduced to the environment in which the transmitter is located.

Furthermore, complex waves significantly increase their power when multiple emitters interact. The flexible antenna allows interaction to occur even in places without access or with many metal obstructions.

Moreover, the addition of the flexible antenna makes it possible to dispense with the ultrasonic emitter, which use was not permitted in places where ultrasound emission is prohibited by labor laws.

Although complex waves do not allow re-colonization of treated areas, tests performed showed that animals could detect places not reached by emissions, the phenomenon of shadows (places without emission) has been resolved by applying a flexible antenna.

All these problems are solved with the dual system of combined emission of electromagnetic waves by means of two different antennas which the device of this invention manages to define, making it possible that electromagnetic waves be applied to indoor environments with obstacles since they do not depend on interaction, therefore they can be used in complex and irregular places, which is impossible for the emitter by means of a single fixed antenna.

Moreover, the use of a flexible antenna in combination with a fixed antenna of electromagnetic waves adds security to the use of these eradicating systems, since this allows to reduce power emissions, which makes it safer for people and ensures greater economy.

As a result of this novel structural and functional structure, the invented device expands the scope of application, being required even for large industrial plants, because it stands out as a powerful resource for eradicating and repelling the aforementioned plague insects, which is not possible with simple emitters, which inefficiency is particularly noticeable in connection with the re-entry of insects and their nesting.

This is an invention that defines a new combination of means designed to achieve superior results, being the same unpredictable and surprising even for one skilled in the art. Consequently, besides being new, its constructive and functional design shows a clear inventive activity, so that it meets conditions required by law for being considered a patent of invention.

### PRIOR ART

Bodies that control and regulate how to control plague of animals and insects, clearly state when and where plague insects should be combated and exterminated.

In the case of animals, a clear example is that related to rats, wherein it is established that their extermination is mandatory, therefore there exit and there are recommended many apparatus and devices specially designed for this purpose, as well as various chemical deratization treatments.

The case of pigeons is different, although in many cases they have been declared a plague, there is a prohibition to kill them, and they can only be repelled. The technical reason is not clearly known. Some authors say that it is monogamous, a symbol of peace, and does not transmit epidemic diseases.

There is also the case of bats, although its extermination is recommended, the most widespread tendency is to drive them away and repel them, as they usually nest and live in inaccessible places, so if they are killed, they putrefy over time generating other problems.

Generally, cockroaches should be combated when their presence causes economic damage or damage to health. They are not usually combated in a warehouse of materials because they do not represent a real damage. This does not avoid that plague control may be required if there is a restaurant or a kindergarten next to the warehouse.

There are also plagues produced by xylophagous insects characterized in that they stay inside wood and attack it from there causing enormous damage as they remain in the larval stage (Worm) for more than two years and when they emerge for reproduction, the wood is hollow. This is very dangerous in a roof because, for example, each French tile absorbs 100cm3 of water during rain, which triplicates the weight of the roof over a weakened wood. But generally they produce irreparable damages in antique furniture, floors, sheds, etc.

Consequences arising from all these plagues range from disgust, as it is the case of cockroaches or spiders, which do not transmit diseases, to death, as it is the case of dengue.

We must also highlight those which cause serious economic damage; it is known that 40% of grain harvest is taken by pests around the world every year.

For the World Health Organization (WHO), it is understood that plague is any animal that threatens health and property of people. An animal cannot be declared as plague if economic or health damage cannot be proved. This tries to prevent killings due to phobias.

Plague animals belong to the animalia order, they generally are larger, and products used to kill them are used in doses that can also kill a person.

Sometimes some animals that excessively proliferate are declared plague, generating commercial and ecological damages, but they do not damage people health. For these reasons, they are controlled and in many cases they are declared plague (hares, moles, dogs, wolves, etc.).

The same happens with insects, with the peculiarity that they usually never lose their plague status. The great difference is that plague animals are well determined.

All insects and some animals delimit their nest sites with pheromones, this makes them come again and try to nest in the same place all the time. Rats can break the material used to prevent their entry, even when they have other places very close to nest. So repellent avoids these re-infestations.

Generally any animal capable of transmitting diseases or generating economic damage is declared plague and an immediate control is required. Lately, there have been added animals that directly threaten life of people and life in society, such as mosquito "Aedes" which transmits Dengue, or the bed bug which keeps the Hepatitis B virus in a viremia state, as well as scorpions which can kill a hypertensive person or a 6-year-old child.

Furthermore, it is noteworthy that the uncontrolled use of insecticides has also its consequences, there are more children hospitalized due to the aerosol of the brand "Raid" than suicides who use insecticides. This is due to the fear to plagues generated by the media, and because generally in insecticide advertisements they are presented as a halo of goodness that protects children.

As a result of these advertisements, there are statistics of the Hospital Posadas in Argentina, wherein there appear numerous cases of children affected by the misuse of pesticides, some with cerebral palsy symptoms.

There are other resources to combat this type of plagues such as some chemical products ("IGR") which regulate growth because they interfere in the development of creatine preventing that insects become adults.

Generally, all known insecticides attack the nervous system of animals, or are acetylcholinesterase inhibitors or inhibitors of sodium channels. They have the advantage of being cheap; some of them are biodegradable and relatively safe, although accidental intoxications always end badly.

The disadvantages are that people increasingly show sensitivity to active ingredients, while almost all known insects, sooner or later, show signs of habituation to such products, which requires increasing the dose, increasing the toxic risk in humans.

However, periodic spraying is required for certain items throughout the national territory. Hotels, Hospitals, Pharmacies, Schools, etc., as well as industries where plague is an economic or advertising risk.

For these reasons, ultimately attention is being paid to the use of other methods, being alternative methods nowadays, being it noticeable that there is a tendency to convert them into primary methods, and leave chemical insecticides as a last resort for the control.

As indicated above, on the market there are some electronic devices for repelling insects through the application of ultrasound in combination with complex waves. They argue that many species of animals have a hearing range with a threshold much higher than human.

The application of ultrasound combined with complex waves for eradicating household plagues, is an optimal ecological alternative to the increasing environmental pollution problem. These repellents are based on the transformation of an electronic high frequency signal into ultrasonic and radiofrequency waves by means of devices called state-of-the-art piezoelectric transducers and RF generators.

The main advantage of these devices is that they do not pollute environment. Using ultrasound in combination with complex waves, no chemicals, pesticides or poisons are required, environmental pollution, allergies and intoxications are avoided.

However for their efficient application, it is necessary to analyze in detail the acoustic conditions of the area to be treated and to foresee potential interferences against the emission of complex waves. As indicated above, ultrasound does not pass through walls, ceilings or floors, nor cardboard objects, carpets, etc., and complex waves are absorbed by large-sized metal surfaces.

There is also habituation to ultrasounds used alone and some side effects on humans and pets have been noticed, so their efficient implementation is not widely possible.

Moreover, some known publications disclose the use of electromagnetic waves for repelling insects. It involves placing an electromagnetic repellent that uses and exploits the electric wiring of the building in which it is installed. It involves using the building wiring for sending a signal that irritates the nervous system of insects and rodents.

Electromagnetic vibrations disorient plague insects, animals which perceive the place as hostile and tend to escape, while they inhibit their instinct of feeding, reproduction, and communication with other insects.

However, specific equipment or facilities have not been developed for the purpose indicated, because metal pipes and the building structure itself absorb such waves annulling the desired effect.

These studies teach that if the magnetic field of the building wiring is reversed, the effect at certain frequencies is repelling, but the house needs to be made of wood and water and lighting pipes need to be made of plastic so that waves are not ground absorbed thereby.

As background part of the Prior Art, we can mention a patent of invention of British origin issued on 16/06/2010, owned by the University of Southampton, entitled "Method and Apparatus for Controlling Pests", which discloses a specific method to trap and exterminate pests such as insects, comprising exposing them to a particulate composition containing at least a magnetic material in combination with one or more pesticides or chemical products that modify their behavior.

U.S. patent 4,086, 720 is also mentioned, which title is "Apparatus for attracting and killing flying insects", 1978, belonging to Mr. John A. Liberty, which discloses a device specially designed to attract flying insects by means of a light, wherein light source is enclosed by a curtain of liquid flowing as rain, dragging a product that combats insects. When they try to get to the source of light, they die by drowning. Liquid is recovered in a tank and is recycled in order to maintain the aforementioned rain curtain.

Publication No. 2153777 of the Spanish Patent and Trademark Office is also part of the Prior Art, produced in March, 2001, which discloses an application entitled "New Product for Repelling Flying Insect" designed to impregnate surfaces in general, even the skin of a user, comprising active ingredients incorporated on a plastic film mixed with a skin solution, such as a toilet water.

Publication AR Argentina 083 261 A1 is also cited as background, which discloses a Repelling Device developed by the same inventor of this application.

This publication teaches an electronic device designed to eradicate plague insects and animals, preventing their reentry, and to repel new infestations, suitable for being applied in both internal and closed environments, and outdoors. It comprises a high frequency generator with dual emitter, one ultrasound emitter and other electromagnetic wave emitter, both amplified. The high frequency generator forms a device comprising a socket for being fed by the conventional electric power system, a network transformer to 12 V; rectifying and filtering means, a high frequency oscillator, amplifiers, an ultrasound transducer, an electromagnetic wave emitter coil, and a low frequency modulating oscillator.

While it is a device that has been successful, it can be said that combining ultrasound with electromagnetic waves in certain cases has been a reason for rejection, especially because high-power ultrasound is invariably required which produces auditive discomfort in people and also in some animals on which no action is desired.

Precisely, this prior disclosure does not teach how to effectively solve the problem being posed.

### DESCRIPTION OF THE INVENTION

The abovementioned drawbacks are effectively solved with the electronic electromagnetic wave emitter by means of two antennas of this patent of invention.

This is a device specially designed to emit radiofrequency waves in ranges that do not affect humans or pets, by combining two emitters included in the same equipment.

Certainly, not using ultrasound adds security to the use of these eradication systems by allowing to decrease power of emissions, which makes it safer for people who used to show some discomfort when exposed to high power ultrasounds.

Moreover, the invented device is very appropriate for acting at industrial plants generally as plague eradicator and repeller, since it has a range that reaches areas where ultrasound is ineffective because it allows plague entry and nesting.

This is a new device that can effectively operate in both internal and external environments because it is not absorbed by acoustically absorbent materials, and combined electromagnetic waves emitted by it have a considerable reach, with the additional advantage that consumption is lower for large surfaces.

The invented device is able to generate electromagnetic waves at ranges above 50 kHz, for this purpose, it is composed of at least three functional units:
- A power supply, which can be the type composed of energy storage batteries or a rectified transformer which takes energy from the network.
- A high-frequency oscillator:
- A medium-frequency oscillator;
- A fixed antenna inside the emitter;
- A flexible antenna connected to the equipment;
- A second oscillator can be added thereto to vary the frequency of the first oscillator for avoiding habituation;
- An amplifier that increases the transmission power.

Under the conditions set forth, the wave produced by the oscillator and amplified, generates an emission of waves of unpredictable harmonics. This brings about some discomfort in plagues causing marked changes in their behavior and hence their mass exodus, so eradication is achieved.

The invented device can establish the frequency on which its electromagnetic waves are emitted, depending on the type of plague that is combated in each case. As it is known, each plague reacts more sensitively to certain frequencies and ignores the rest.

Furthermore, the invented device stands out because it maintains the capacity to emit electromagnetic waves regardless of the medium in which they are emitted, substantially increasing its operating capacity and functional efficiency.

In effect, as it is known, electromagnetic waves are only magnetic fields electrically generated, which are used in an enormous number of applications ranging from radio to computed tomography, including light which also has electromagnetic properties.

Electromagnetic waves are also used for radar television, satellites, microwave ovens.

It is especially emphasized that, in this particular case, the emitter of electromagnetic waves used by the invented device, does not resort to the fixed wiring of the building, so it originally avoids the possibility that they may be absorbed, thus being less effective.

Moreover, the incorporation of the referred amplifier, and depending on the coil which is being used, the effective scope of action can be from a few square meters, to very considerable distances without affecting people and pets.

### INVENTIVE ACTIVITY

No device intended for repelling and eradicating insects being currently known, proposes or even suggests the constructive solution that arises from what is indicated in the preceding paragraphs, which is the reason why it is an alternative that, apart from being novel, has a clear inventive activity.

### BRIEF DESCRIPTION OF FIGURES

To explicitly state the advantages which have been briefly discussed, to which users and those skilled in the art will be able to add many other, and to facilitate understanding of constructive, constitutive and functional features of the invented device, below a preferred example of embodiment is described, which is schematically represented, with the express explanation that, precisely, because it is an example, it is not appropriate to assign a limited or exclusive nature thereto in connection with the scope of protection of this patent, but it is intended to merely explain and illustrate the basic concept on which it is based.
Figure 1 is a graph representation of the housing that contains the device of this invention.
Figure 2 is a first constructive and functional diagram that includes the basic elements which are part of the invented device.
Figure 3 is a second constructive and functional diagram showing the invented device itself.

It is clarified that, in both figures, like reference numbers and letters, are the same or equivalent parts or constituent elements of the assembly, according to the example chosen for this explanation of the invention.

### DETAILED DESCRIPTION OF A PREFERRED EXAMPLE

As it is particularly represented by diagrams 2 and 3, the electronic electromagnetic wave emitter to which this invention refers, is composed of a power supply (1), to which it is linked via a network transformer (2).

From such power supply (1), by means of the referred transformer (2), the strength of the electrical current required for the device is reduced, in this case to 12 volts, by means of said transformer (2).

Then the current is rectified by a diode bridge or rectifier bridge (3), and filtered through filter capacitors, which gives a continuous current without noise, or with as little noise as possible.

This current powers an oscillator circuit (4), which can be constructed in various ways. In preferred embodiments, a clock generator may be used, but millions of circuits may be used for generating a wave of up to approximately 100 KHz.

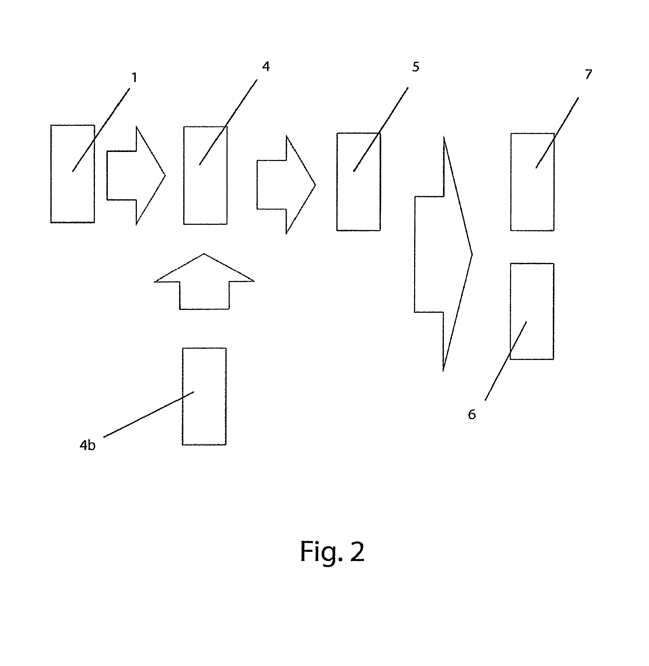

The second oscillator (4b) (shown in Figure 2), is a CR (capacitor resistor) chain that is applied to the voltage control input to the integrated oscillator (4). This chain ranges its frequency according to the capacitor being used, which causes in the main oscillator, a sweep within a frequency range determined by components.

In the case of the inventive device, it may vary by plus or minus 20 KHz, which is altered depending on the time of application established according to the plague to be eradicated or repelled.

The invention contemplates that power supply is obtained using energy storage batteries, in which case, said oscillator (4) is replaced by a second circuit configured into a ramp generator format, which produces variation of frequencies without the need of the electric power system.

In the same Figure 2 it is showed that the output of the oscillator (4) is directed to the signal amplifiers (5) that is applied to the electromagnetic wave generating coil (6) and the flexible antenna which emits electromagnetic waves (7).

The operation is based on the knowledge of disturbance generated to different plagues by the electromagnetic waves.

Since many plagues have demonstrated an ability to find places where complex waves do not reach, the addition of electromagnetic waves emitted by a flexible antenna solves this problem, giving to the invented device great operating advantages compared to all what has been disclosed by the prior art.

In effect, the emission from both types of combined antennas avoids radiofrequency shades. It also avoids the use of ultrasounds and protection of places that are acoustically absorbent.

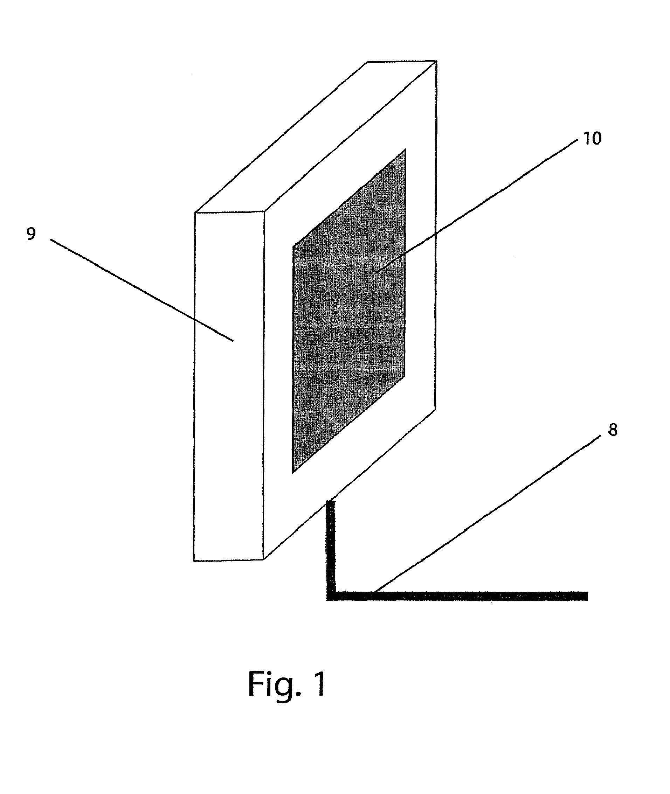

Looking now at Figure 1, it can be said that the housing (9) carrying the invented device, should preferably be positioned at a height of 2 or 3 meters favoring its operation, duly attached to a stand alone power supply.

Once it is connected, it starts to generate a frequency sweep, which may be emitted by the fixed electromagnetic wave emitter coil (6) that is part of the emitting device (7) located inside the device, or they may be emitted by the flexible antenna (10) attached to a corresponding electromagnetic wave emitter coil.

These combined waves generate plague repellency, expulsion and driving away.

The invented repelling device 1 made in this way, in a basic embodiment comprises:
(1) Electric power supply
(2) A network transformation to12 V
(3) Rectification and filtering means
(4) Primary and secondary oscillator circuit (4b) Second oscillator
(5) Amplifiers
(6) Electromagnetic wave emitter coil
(7) Flexible antenna coil
(8) Electromagnetic wave emitter flexible antenna
(9) Housing
(10) Internal Antenna

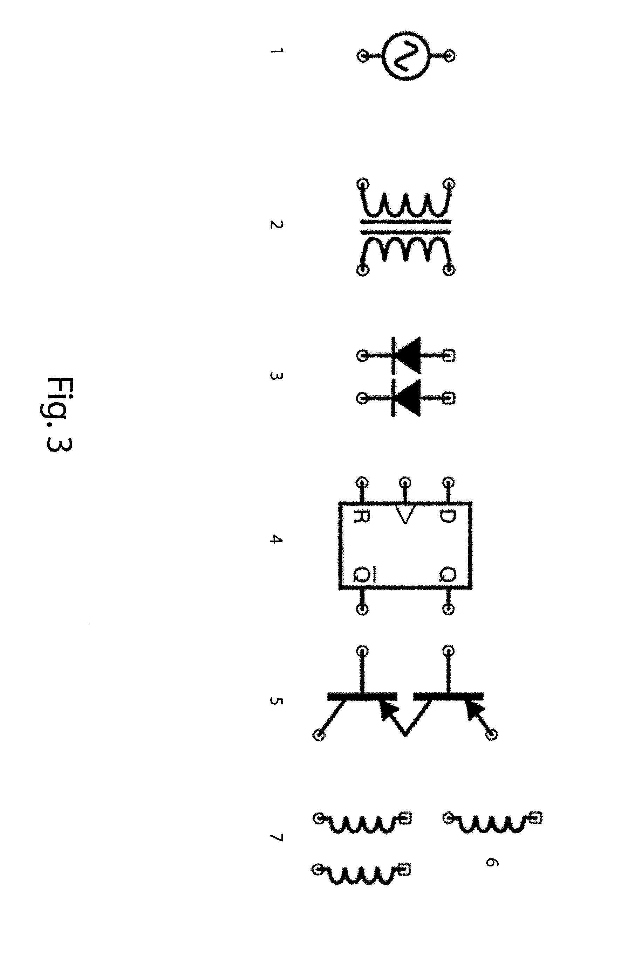

In a preferred embodiment, the device thus described and exemplified corresponds to the electronic circuit represented by Figure 3, differing from ultrasound generators and electromagnetic waves facilities in that:
- It reaches areas and sectors wherein ultrasound devices are not effective.
- It does not require building wiring to generate electromagnetic waves which affect insects, so that they maintain their effectiveness and are not absorbed by piping and the building structure.
- They allow that waves be emitted at low power eliminating any possibility of affecting people and pets.
- It avoids using ultrasounds which is prohibited by labor laws in many industries worldwide.

This is a new device specially designed to affect the animals or insects' ability to orient themselves and also to alter their nervous system.

The frequency and power of combined waves emitted by the invented device are previously regulated, depending on the type of plague and animal or insect to be attacked. Frequency is adjusted at the factory, especially considering the intermediate frequencies' impact on people, the device gets out specifically regulated for each plague.

As shown in the Figures, the invented device provides that one may select any of the wave emitter antennas or both on a simultaneous basis by means of a respective switch. It can be a three-position key.

In case of controlling plagues of rats, it is advisable to use together the two types of combined waves, since electromagnetic waves emitted by the fixed antenna reach places which are not reached by the frontal emitter.

## Claims

1. ELECTRONIC ELECTROMAGNETIC WAVE EMITTER FOR REPELLING PLAGUE INSECTS, designed to eradicate plague insects and animals, preventing their reentry, and to repel new infestations; suitable for being applied to both internal and closed environments such as large warehouses and industrial plants, as well as outdoors, **characterized in that** it comprises a generator of electromagnetic waves with double emitter, which combines a wave emitter having a fixed antenna and other wave emitter having a flexible antenna, both amplified.

2. ELECTRONIC ELECTROMAGNETIC WAVE EMITTER, according to claim 1, **characterized in that** the wave generator constitutes a device that comprises an electric power supply, attached to a current transformer that adjusts current according to the driving circuit, rectifying and filtering means, a high frequency oscillator, a medium-frequency oscillator, amplifiers, a fixed electromagnetic wave emitter coil, a flexible electromagnetic wave emitter coil, and a low-frequency modulating oscillator.

3. ELECTRONIC ELECTROMAGNETIC WAVE EMITTER, according to claim 2, **characterized in that** the network electrical current is supplied to the device via a transformer that reduces the power of the electric current to 12 volts.

4. ELECTRONIC ELECTROMAGNETIC WAVE EMITTER, according to claim 2, **characterized in that** power supply is provided by an energy storage battery, in which case a second circuit, configured into a ramp generator format, produces variation of frequencies without the need of the electric power system of the facility.

5. ELECTRONIC ELECTROMAGNETIC WAVE EMITTER, according to claim 2, **characterized in that** the electrical current is rectified by a diode bridge (or rectifier bridge), and filtered through filter capacitors.

6. ELECTRONIC ELECTROMAGNETIC WAVE EMITTER, according to claim 2, **characterized in that** the electrical current feeds an oscillator circuit (4) of the type suitable for generating waves between approximately 50 KHz and 100 KHz.

7. ELECTRONIC ELECTROMAGNETIC WAVE EMITTER, according to claim 2, **characterized in that** the generator can vary the wave by about (plus or minus) 20 KHz.

8. ELECTRONIC ELECTROMAGNETIC WAVE EMITTER according to claim 2, **characterized in that** the generator comprises a high-frequency oscillator, a medium-frequency oscillator, a fixed antenna inside the emitter, a flexible antenna connected to an equipment, a second oscillator (that may vary the frequency of the first one to avoid habituation), and an amplifier which increases the emission power, to generate waves of unpredictable harmonics.

9. ELECTRONIC ELECTROMAGNETIC WAVE EMITTER, according to claim 2, **characterized in that** the wave generator can vary the wave by about (plus or minus) 20 KHz.

10. ELECTRONIC ELECTROMAGNETIC WAVE EMITTER, according to claim 8, **characterized in that** the second oscillator is an RC chain that is applied to the voltage control input into the integrated oscillator (4).

11. ELECTRONIC ELECTROMAGNETIC WAVE EMITTER, according to claim 1, **characterized in that** the oscillator output (4) is directed to signal amplifiers (5) that is applied to the electromagnetic waves generating coil (6).
